# EUROPEAN PATENT APPLICATION

(11) **EP 4 733 918 A1**
(43) Date of publication of application: **29.04.2026**
(21) Application number: 24843350.0
(22) Date of filing: 26.06.2024
(51) Int. Cl.: G06F 3/04883, G06F 3/01

(54) **ELECTRONIC DEVICE AND METHOD FOR CORRECTING HANDWRITING INPUT DATA**

(30) Priority: 20.07.2023 KR 20230094460; 11.08.2023 KR 20230105709
(71) Applicant: Samsung Electronics Co., Ltd., Suwon-si, Gyeonggi-do 16677 (KR)
(72) Inventor: PARK, Jeongwan, Suwon-si, Gyeonggi-do 16677 (KR); KWAK, Taewon, Suwon-si, Gyeonggi-do 16677 (KR); KIM, Jihoon, Suwon-si, Gyeonggi-do 16677 (KR); LEE, Donghyuk, Suwon-si, Gyeonggi-do 16677 (KR); SEO, Heungkyo, Suwon-si, Gyeonggi-do 16677 (KR); KIM, Heewoon, Suwon-si, Gyeonggi-do 16677 (KR); PARK, Sunghwan, Suwon-si, Gyeonggi-do 16677 (KR)
(74) Representative: Gulde & Partner
(86) International application number: PCT/KR2024/008890
(87) International publication number: WO 2025/018630

(57) **Abstract**

The electronic device according to an embodiment can receive a user input comprising a touch trajectory from a touchscreen display. The electronic device according to an embodiment can recognize handwriting input data in units of individual phoneme characters on the basis of the user input. The electronic device according to an embodiment can distinguish a first stroke and Nₜₕ strokes constituting a phoneme character for each phoneme character corresponding to the recognized handwriting input data. The electronic device according to an embodiment can check a point intersection between the first stroke and an Nₜₕ stroke for each phoneme character. The electronic device according to an embodiment can correct each phoneme character, using the location of the checked point intersection as a reference. The electronic device according to an embodiment can update a touch trajectory corresponding to the handwriting input data, on the basis of the corrected phoneme character.

## Description

### [Technical Field]

The disclosure relates to an electronic device and a method for correcting handwriting input data.

### [Background Art]

An electronic device provides a function of inputting handwriting on a touchscreen display. The electronic device may recognize a handwriting input (handwritten input, cursive input) through a touch trajectory (or contact) on the touchscreen display, and may use the recognized handwriting input data for various functions (e.g., memo writing, handwriting message transmission, and the like) of the electronic device.

However, the handwriting input drawn by the user on the touchscreen display may have a large amount of error depending on the characteristics of the touchscreen display surface or the handwriting characteristics of the user. Accordingly, technical development related to correction or beautification of handwriting input data on the touchscreen display has been carried out.

### [Disclosure of Invention]

### [Technical Problem]

The correction method for the handwriting input data may include a method of applying a pen or brush style determined by the system for correction or a method of applying a commercialized font to the user's handwriting input in a batch process for correction. However, the above-described correction methods may not properly reflect the user's unique handwriting characteristics, resulting in a loss of the user's handwriting characteristics or inappropriate correction that does not match the user's handwriting style.

Various embodiments are intended to provide a method of providing a more neatly organized handwriting style while maintaining the user's handwriting characteristics (or handwriting style).

However, the problems to be solved in the disclosure are not limited to the problems mentioned above, and may be variously expanded without departing from the idea and scope of the disclosure.

### [Solution to Problem]

An electronic device according to an embodiment may include a touchscreen display, a memory configured to store executable instructions, and a processor configured to access the memory to execute the instructions.

The instructions according to an embodiment, when executed by the processor, may be configured to cause the electronic device to receive a user input including a touch trajectory from the touchscreen display. The instructions according to an embodiment, when executed by the processor, may be configured to cause the electronic device to recognize handwriting input data in units of individual phoneme characters based on the user input. The instructions according to an embodiment, when executed by the processor, may be configured to cause the electronic device to distinguish a first stroke and Nₜₕ strokes constituting a phoneme character for each phoneme character corresponding to the recognized handwriting input data. The instructions according to an embodiment, when executed by the processor, may be configured to cause the electronic device to check a point intersection between the first stroke and Nₜₕ strokes for each phoneme character. The instructions according to an embodiment, when executed by the processor, may be configured to cause the electronic device to correct each phoneme character based on the location of the checked point intersection. The instructions according to an embodiment, when executed by the processor, may be configured to cause the electronic device to update a touch trajectory corresponding to the handwriting input data based on the corrected phoneme character.

A method for correcting handwriting input data performed by an electronic device according to an embodiment may include receiving a user input including a touch trajectory from a touchscreen display. The method according to an embodiment may include recognizing handwriting input data in units of individual phoneme characters based on the user input. The method according to an embodiment may include distinguishing a first stroke and Nₜₕ strokes constituting a phoneme character for each phoneme character corresponding to the recognized handwriting input data. The method according to an embodiment may include checking a point intersection between the first stroke and Nₜₕ strokes for each phoneme character. The method according to an embodiment may include correcting each phoneme character based on the location of the checked point intersection. The method according to an embodiment may include updating a touch trajectory corresponding to the handwriting input data based on the corrected phoneme character.

The electronic device according to the disclosure may include a computer-readable recording medium having recorded thereon a program for implementing a method for correcting handwriting input data.

### [Advantageous Effects]

According to various embodiments, an electronic device, a method, and a recording medium may recognize handwriting input data as individual phoneme character (or single letter) units and correct the user's handwriting for each phoneme character by considering the relationship characteristics between the strokes that configure the phoneme character.

According to various embodiments, an electronic device, a method, and a recording medium may not only change the user's handwriting input into a more neatly organized handwriting than the original but also maintain the user's handwriting characteristics even after correction, providing an effect that does not cause the user to feel uncomfortable about the change in handwriting.

Other effects obtainable or predictable from the various embodiments of the disclosure may be directly or implicitly disclosed in the detailed description of the embodiments of the disclosure.

### [Description of Drawings]

FIG. 1 is a block diagram of an electronic device in a network environment according to an embodiment.
FIG. 2 is a schematic block diagram of an electronic device supporting a writing input correction function according to an embodiment.
FIG. 3 illustrates a method for correcting handwriting input data of an electronic device according to an embodiment.
FIG. 4 illustrates an example of recognition for each phoneme unit according to an embodiment.
FIGS. 5A to 5D illustrate examples of a reference feature of a recognition code for each phoneme unit of a language according to an embodiment.
FIG. 6 illustrates a method for correcting handwriting input data of an electronic device according to an embodiment.
FIGS. 7A and 7B illustrate examples of a correction screen in which a part of a stroke for handwriting input is excluded according to an embodiment.
FIGS. 8 and 9 illustrates screens showing a difference before and after correction of handwriting input according to an embodiment.
FIG. 10 illustrates a method for correcting handwriting input data of an electronic device according to an embodiment.

### [Mode for Invention]

The electronic device according to the embodiments disclosed in the disclosure may be various types of devices. The electronic device may include, for example, a portable communication device (e.g., a smartphone), a computer device, a portable multimedia device, a portable medical device, a camera, a wearable device, or a home appliance. The electronic device according to an embodiment of the disclosure is not limited to the above-described devices.

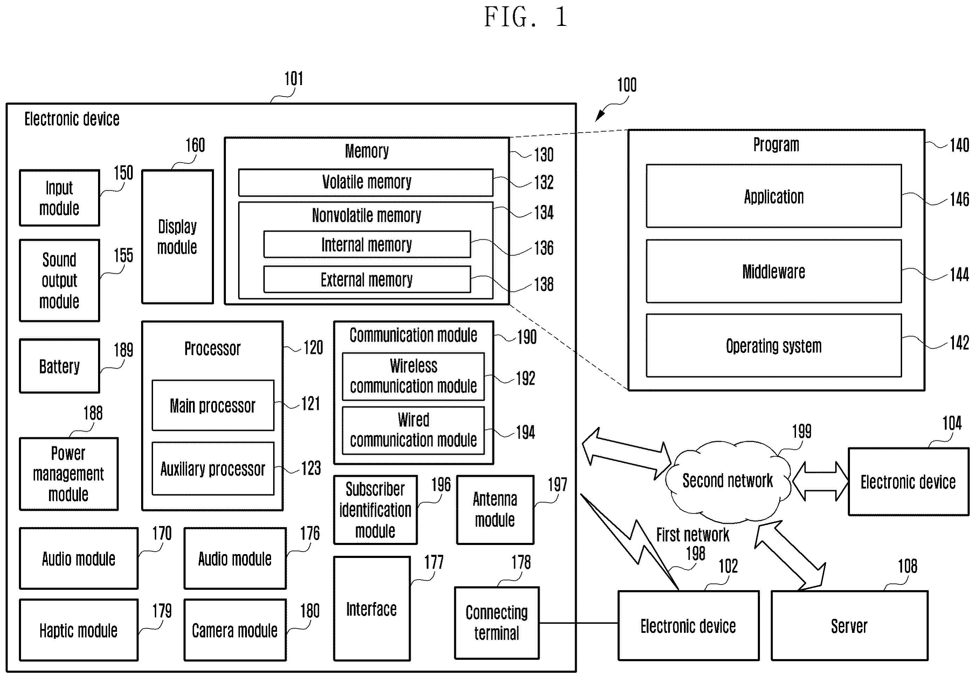

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

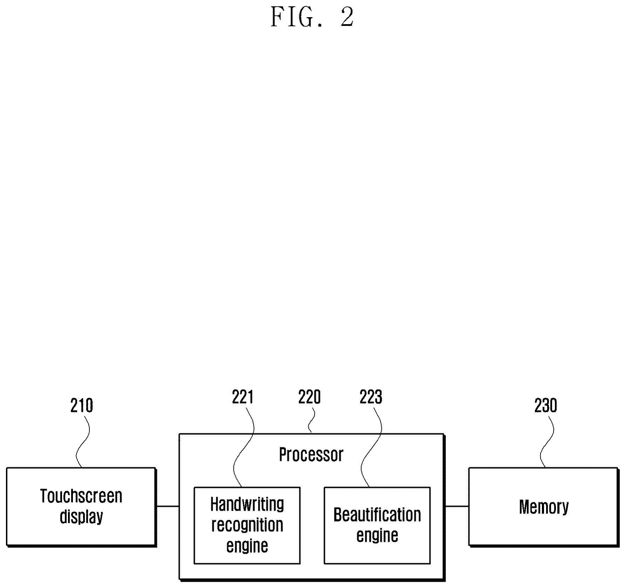

FIG. 2 illustrates a schematic block diagram of an electronic device supporting a writing input correction function according to an embodiment.

Referring to FIG. 2, an electronic device supporting a writing input correction function according to an embodiment may include a touchscreen display 210 (e.g., the display module 160 in FIG. 1), a processor 220 (e.g., the processor 120 in FIG. 1), and a memory 230 (e.g., the memory 130 in FIG. 1). The electronic device 101 illustrated in FIG. 2 may further include at least some of the configurations and/or functions of the electronic device 101 in FIG. 1.

The touchscreen display 210 may display various images under the control of the processor 220. For example, the touchscreen display 210 may be implemented as any one of a liquid crystal display (LCD), a light-emitting diode (LED) display, a micro LED display, a quantum dot (QD) display, or an organic light-emitting diode (OLED) display, but is not limited thereto.

The touchscreen display 210 may detect touch and/or proximity touch (or hovering) inputs using a part of the user's body (e.g., a finger) or an input device (e.g., an electronic pen). For example, the touchscreen display 210 may include one or more touch sensors. The touch sensor may include any one of a conductivity sensor, a capacitive touch sensor, a resistive touch sensor, a surface touch sensor, a projected capacitive (PCAP) touch sensor, or a surface acoustic wave touch sensor, but is not limited thereto. The touchscreen display 210 may include at least some of the configurations and/or functions of the display module 160 and the input module 150 in FIG. 1.

The memory 230 may store various instructions which may be executed by the processor 220. The instructions may include control commands such as arithmetic and logical operations, data transfer, and input/output recognizable by the processor 220. The memory 230 may include at least some of the configurations and/or functions of the memory 130 in FIG. 1.

The processor 220 may be operatively, functionally, and/or electrically connected to each component of the electronic device 101 (e.g., the touchscreen display 210 and the memory 230), and may have a configuration capable of performing operations or data processing for controlling and/or communicating with the components. The processor 220 may include at least some of the configurations and/or functions of the processor 120 in FIG. 1.

According to an embodiment, the processor 220 may include a handwriting recognition engine 221 and a beautification engine 223. The processor 220 may perform handwriting recognition for the user input through a handwriting recognition engine 221, and may correct (or beautify, modify, re-write, adopt, revamp, recast, or alter) the recognized handwriting input (cursive input and touch drawing input) through a beautification engine 223.

For example, the input data of the handwriting recognition engine 221 may be touch data, and the output data of the handwriting recognition engine 221 may be handwriting input data (e.g., including a recognition code and stroke data). The handwriting input data, which is the recognition result of the handwriting recognition engine 221, is transferred as input data of the beautification engine 223, and the output data of the beautification engine 223 may be updated handwriting input data (or updated stroke data).

According to an embodiment, the processor 220 may transfer result data (e.g., updated stroke data) output from the beautification engine 223 to the touchscreen display 210 and control the touchscreen display 210 to output a corrected (or beautified) handwriting input.

The operations and data processing functions that the processor 220 may implement on the electronic device 101 are not limited, and the following will describe operations for correcting (or beautifying, modifying, re-writing, adopting, revamping, recasting, or altering) the user's handwriting input (cursive input, touch drawing input) in units of phoneme characters. Operations of the processor 220 that will be described below may be performed by loading instructions stored in the memory 230. The electronic device 101 according to an embodiment may include the touchscreen display 210, the memory 230 configured to store executable instructions, and the processor 220 configured to access the memory 230 to execute the instructions.

The processor 220 according to an embodiment may receive a user input including a touch trajectory from the touchscreen display 210.

The processor 220 according to an embodiment may recognize the handwriting input data in units of individual phoneme characters, based on the user input.

The processor 220 according to an embodiment may distinguish the first stroke and that Nₜₕ stroke that constitute a phoneme character for each phoneme character included in the recognized handwriting input data.

The processor 220 according to an embodiment may check a point intersection of the first stroke and the Nₜₕ stroke points for each phoneme character.

The processor 220 according to an embodiment may perform correction for each phoneme character according to the locations of the checked point intersections.

The processor 220 according to an embodiment may update the touch trajectory corresponding to the handwriting input data, based on the corrected phoneme character.

The touch trajectory according to an embodiment may include coordinate data of consecutive touch points.

The processor 220 according to an embodiment may perform an operation of recognizing the handwriting input data in units of individual phoneme characters based on the user input, and may output a recognition code and stroke data for each phoneme character as a result of the recognition.

The stroke data according to an embodiment may include at least one of a recognition code for identifying a phoneme character, the number of strokes, the order of strokes, stroke point index information, stroke thickness, stroke location, stroke length, stroke slope, stroke direction, and a distance between strokes.

The processor 220 according to an embodiment, as the operation of distinguishing a first stroke and Nₜₕ strokes constituting the phoneme character for each phoneme character, may be further configured to identify each recognition code for each phoneme character included in the handwriting input data, extract a stroke feature constituting individual phoneme character, compare the reference feature defined in the recognition code corresponding to each phoneme character with the stroke feature of the recognized phoneme character to select a phoneme character to be corrected from among the handwriting-recognized user inputs, and distinguish between the first stroke and Nₜₕ stroke for the selected phoneme character.

The processor 220 according to an embodiment, as the operation of, extracting a stroke feature constituting individual phoneme character, may be configured to extract angular components of the points included in each stroke, convert the extracted angular components into direction vectors, convert the angular components of the points into the 8 direction vectors, and convert 8 direction vectors into stroke scores to distinguish each stroke type.

The stroke type according to an embodiment may include one of the horizontal stroke type, vertical stroke type, or other stroke types.

The processor 220 according to an embodiment, as the operation of correcting each phoneme character based on the location of the checked point intersections, may be configured to determine whether the touch trajectories of the first stroke and the Nₜₕ stroke constituting the phoneme character intersect each other, remove the overstretched trajectory based on the points of the first stroke and the Nₜₕ stroke when there is a point intersection in the touch trajectories of the first stroke and the Nₜₕ stroke, and increase the touch trajectory of either the first stroke or the Nₜₕ stroke so that a point intersection occurs when there is no point intersection in the touch trajectories of the first stroke and the Nₜₕ stroke.

The processor 220 according to an embodiment, as the operation of increasing the touch trajectory of the first stroke or the Nₜₕ stroke so that a point intersection occurs among the touch points when there is no point intersection of the touch points of the first stroke and the Nₜₕ stroke, may generate a point intersection between two strokes when there is no point intersection where the trajectories intersect between the points corresponding to the touch trajectories of the first stroke and the Nₜₕ stroke, and increase the touch trajectory so that the first stroke or the Nₜₕ stroke is connected to the generated point intersection.

The processor 220 according to an embodiment, as the operation of correcting each phoneme character based on the location of the checked point intersections, may be configured to check a point intersection between the start and end points of one stroke when the phoneme character is recognized as a phoneme character composed of one stroke, remove the points of the overstretched trajectory when the point intersection between the start and end points is overstretched, and increase the touch trajectory so that a point intersection occurs when the start and end points do not intersect.

The processor 220 according to an embodiment may be configured not to perform correction for the recognized phoneme character when the stroke feature of the phoneme character recognized based on the user input does not meet the reference feature defined in the recognition code of the corresponding phoneme character.

The processor 220 according to an embodiment, as the operation of determining whether the touch trajectories of the first stroke and the Nₜₕ stroke constituting the phoneme character intersect each other, may be configured to use a counterclockwise (CCW) algorithm, to check whether there is a point intersection between points of the first stroke and the Nₜₕ stroke, or to check whether some of the points included in the trajectory of the first stroke are included in some of the points included in the trajectory of the Nₜₕ stroke.

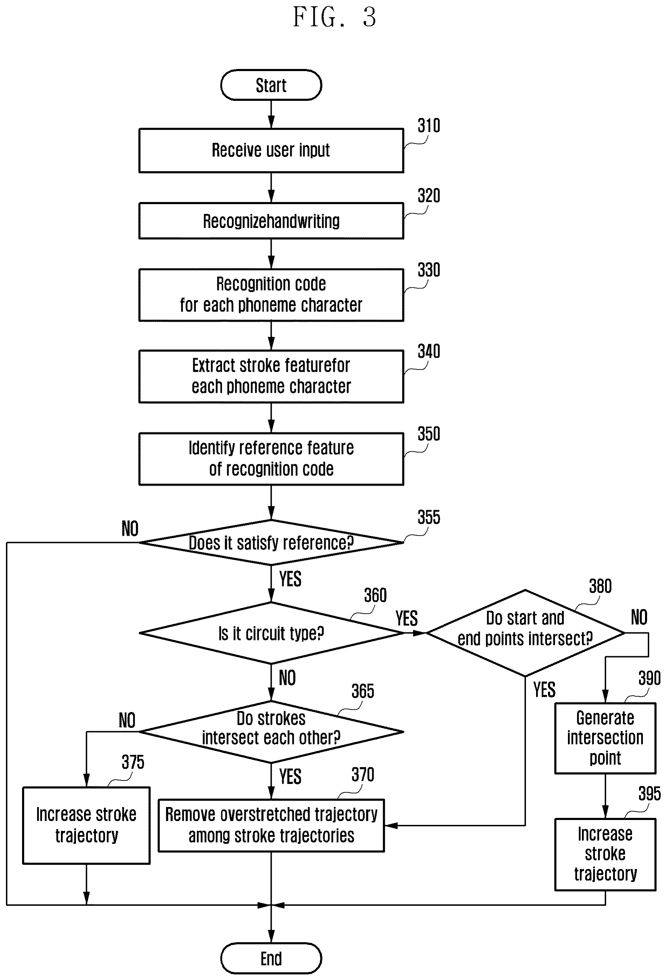

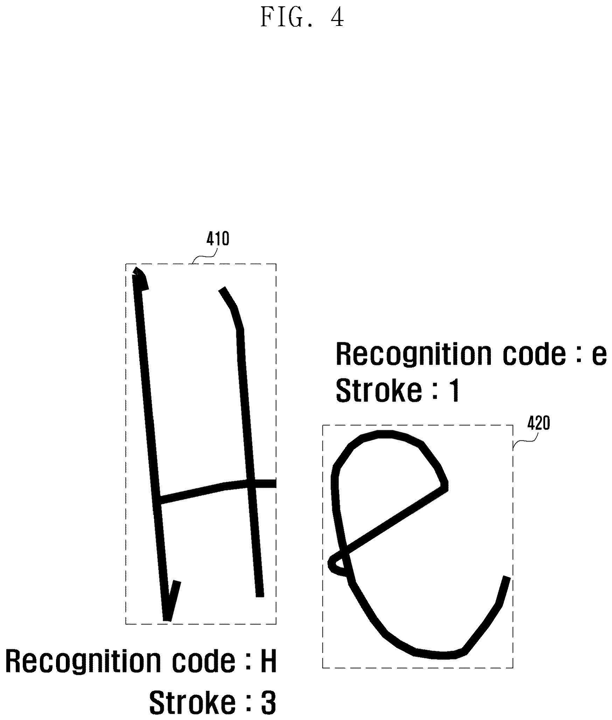

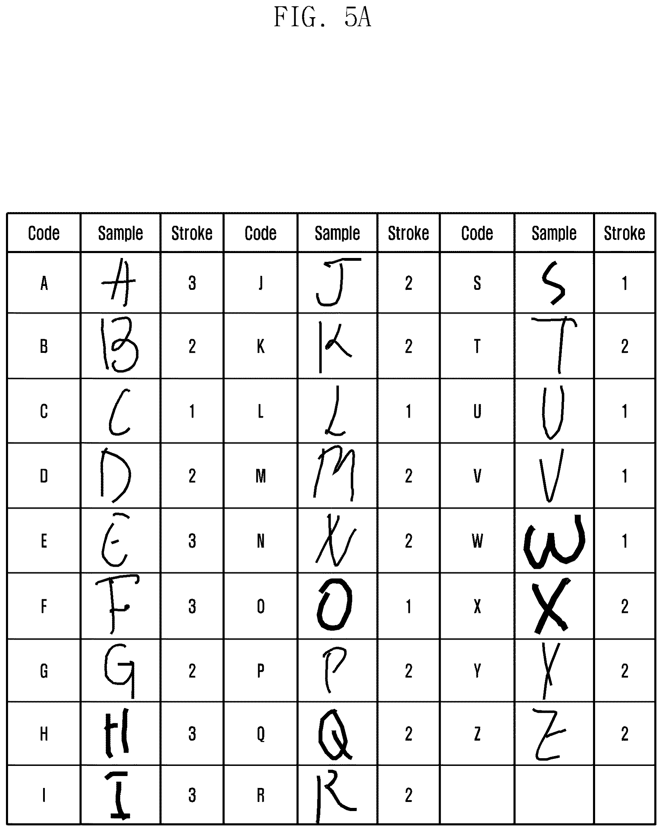

FIG. 3 illustrates a method for correcting handwriting input data of an electronic device according to an embodiment, and FIG. 4 illustrates an example of recognition for each phoneme unit according to an embodiment. FIGS. 5A to 5D illustrate examples of a reference feature of a recognition code for each phoneme unit of a language according to an embodiment.

Referring to FIG. 3, in operation 310, the processor (e.g., the processor 120 in FIG. 1 or the processor 220 in FIG. 2) of the electronic device 101 according to an embodiment may receive a user input (e.g., touch data) including a touch trajectory.

The processor 220 may receive a user input (e.g., touch data including a touch trajectory) based on a proximity and/or touch signal from the touchscreen display 210.

For example, the electronic device may receive a user input through an application (e.g., a memo app or a note app) capable of handwriting input or a region (e.g., a touch drawing region) capable of handwriting input. The user input may include a touch trajectory (or touch coordinates).

In operation 320, the processor 220 may recognize a handwriting input (e.g., cursive input, touch drawing input, pen input) based on the user input. For example, the processor 220 may analyze the touch data transferred from the touchscreen display 210 through a handwriting recognition engine (e.g., the handwriting recognition engine 221 in FIG. 2) to perform handwriting recognition. The handwriting input may refer to data in which characters are recognized by the user's touch trajectory.

According to an embodiment, the processor 220 may recognize handwriting input by dividing the same in units of individual phoneme characters (or single letters) through the handwriting recognition engine 221. A phoneme character or single letter unit may mean the smallest sound unit that distinguishes the meaning of a word in the phonetic system of a language. For example, English distinguishes each alphabet in units of phoneme characters, and Korean distinguishes consonants " 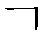 ", " 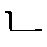 ", and " 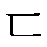 " and vowels " 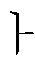 " and " 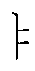 " in units of phoneme characters. In addition, in the case of Korean, it may also be distinguished into initial/medial/final consonants depending on the location of the phoneme character.

For example, the handwriting recognition engine 221 may group strokes according to a touch trajectory included in a user input (e.g., touch data) in units of phoneme characters (or single letters) and recognize (or select) a phoneme character (or in units of single letters) composed of the grouped strokes. For example, the handwriting recognition engine 221 may group a first stroke (e.g., a vertical stroke) and a second stroke (e.g., a horizontal stroke) as a group, when the first and second strokes constitute one character (e.g., the capital letter T), and recognize (or select) the grouped strokes as one phoneme character (e.g., the capital letter T).

The handwriting recognition engine 221 may output stroke data (or handwriting input data, cursive data, touch drawing data, and pen drawing data) of the recognized phoneme character (e.g., English, numbers, Korean, symbols, etc.) as handwriting input data, which is the recognition result. The stroke data may include a recognition code (e.g., T) for identifying a phoneme character and stroke information (e.g., stroke information constituting the phoneme character "T"). The stroke information may include at least one of the number of strokes (e.g., a number) grouped by one phoneme character, the order of strokes (e.g., the order of the first stroke and the second stroke), points of the strokes (e.g., index information of points included in the first stroke and index information of points included in the second stroke), the stroke width or touch pressure (e.g., the stroke thickness or the size of a touch region), the location of the stroke, the length of the stroke, the slope of the stroke, the direction of the stroke, and/or the distance between the strokes.

According to an embodiment, the handwriting recognition engine 221 may perform a process of learning and recognizing the user's handwriting input through deep learning or machine learning.

The processor 220 may transfer the recognized handwriting input data (e.g., recognition code and stroke data) recognized in units of phoneme characters to the beautification engine 223 through the handwriting recognition engine 221.

For example, as illustrated in FIG. 4, the user may input "He" by handwriting on the touchscreen display 210. The processor 220 may distinguish three strokes constituting the letter "H" and one stroke constituting the letter "e" through a phoneme character-based handwriting recognition and recognize the capital letter "H" 410 and the small letter "e" 420. The capital letter "H" 410 in the phoneme character unit is a recognition code H (e.g., a digital code) and includes three strokes, and the small letter "e" 420 is a recognition code e (e.g., a digital code) and includes one stroke.

The processor 220 may transfer the handwriting input result recognized through the handwriting recognition engine 221 to the beautification engine 223 as a recognition code and stroke data for each phoneme character unit.

The processor 220 may correct (or beautify, modify, re-write, adopt, revamp, recast, or alter) the user's handwriting input in units of phoneme character by analyzing the features of the handwriting input through the handwriting beautification engine 223, as shown in operations 330 to 395.

In operation 330, the processor 220 may identify a recognition code for each phoneme character included in the handwriting input, and in operation 340, the processor 220 may extract a stroke feature that constitutes an individual phoneme character.

The processor 220 may extract angular components of consecutive points of each grouped stroke constituting a phoneme character through the beautification engine as the operation of extracting a stroke feature of a phoneme character, convert the angular components of the points into 8 direction vectors, and then convert the 8 direction vectors into stroke scores to distinguish each stroke type. The processor 220 may identify the structure and shape of a phoneme character based on the types of grouped strokes. For example, a stroke may be implemented in the form of one of a horizontal stroke, a vertical stroke, or other stroke types.

The operation of extracting stroke features may be implemented by using known technologies, and thus a detailed description thereof will be omitted, and in addition to the illustrated method, other technologies for extracting stroke features may be applied.

In operation 350, in parallel, individually, or independently of operation 340, the processor 220 may identify a reference feature (or reference spec) defined in each recognition code for each recognized phoneme character. According to an embodiment, operation 350 may be performed after operation 330.

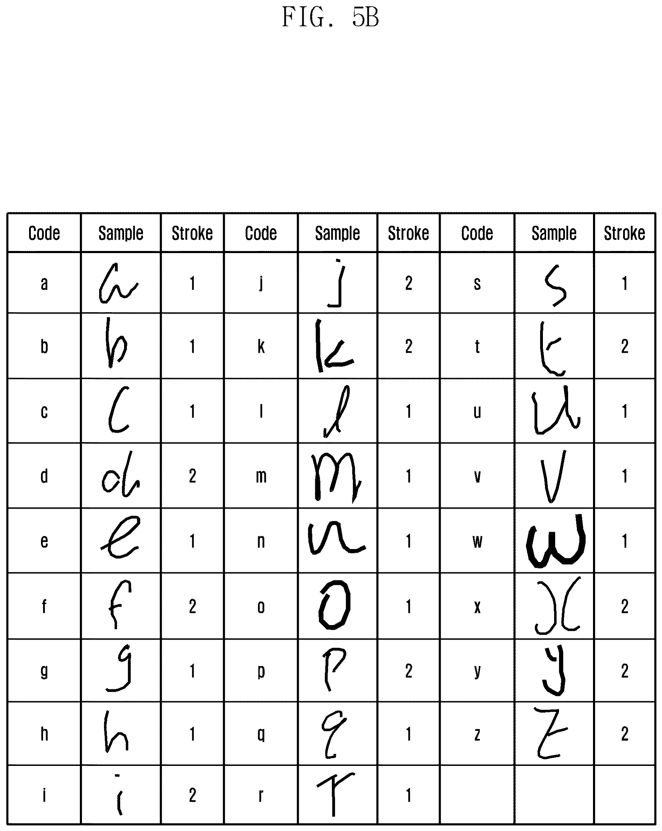

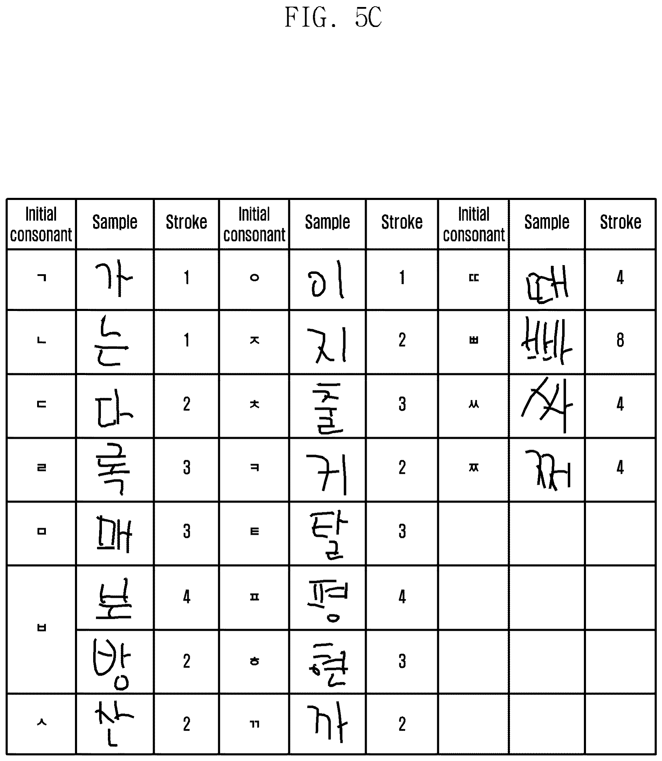

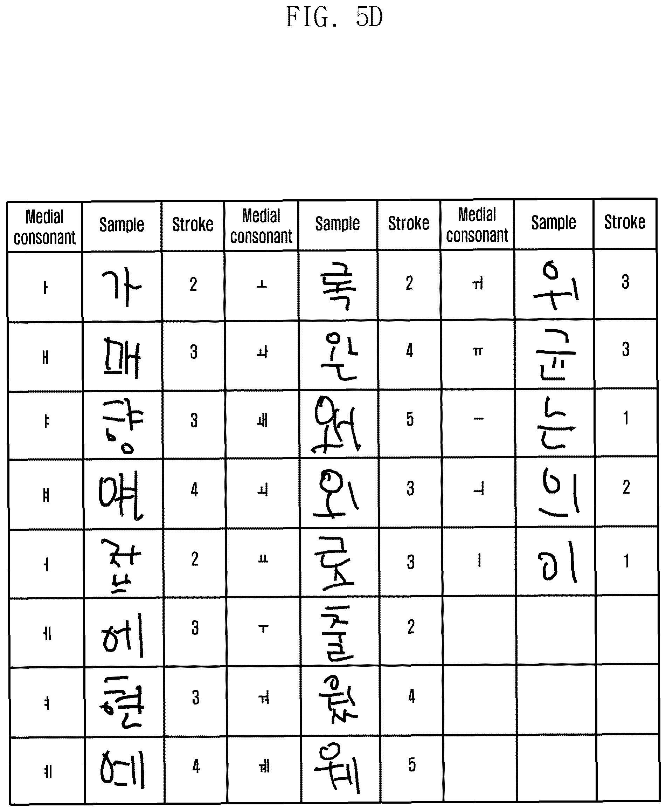

According to an embodiment, the electronic device 101 may store reference feature (or reference spec) information (e.g., a data base) of the recognition code for each phoneme character, or may obtain the reference feature information of the recognition code for each phoneme character of the language corresponding to the user input in association with another electronic device (e.g., a server). For example, FIGS. 5A to 5C illustrates reference features (or reference spec) of recognition codes for each phoneme unit, and FIG. 5A shows a reference feature of English capital letters and FIG. 5B shows a reference feature of English small letters. FIG. 5C shows a reference feature of the initial/final consonants of Korean consonants, and FIG. 5D illustrates a reference feature of the medial vowel of Korean vowels. Although not shown in the drawings, it may be applied to other types of phoneme units according to a language system.

In operation 355, the processor 220 may determine whether the stroke feature of the phoneme meets the reference feature (or reference spec) of the corresponding recognition code.

For example, in the case of the capital letter "M", the recognition code is M (digital code), and the reference number of strokes is two. If the user's handwriting input is recognized as a phoneme character "M" among phoneme characters included in the handwriting input, but the number of strokes constituting the recognized phoneme character "M" is extracted as three features, the processor 220 may determine that the "M" handwritten by the user does not meet the reference features of the defined recognition code M.

If the recognized phoneme character's stroke feature meets the reference feature of the corresponding recognition code, the processor 220 may select the recognized consonant character as a correction target character and proceed to operation 365, and if the recognized phoneme character's stroke feature does not meet the reference feature of the corresponding recognition code, the recognized phoneme character may be excluded from the correction target character and the process of FIG. 3 may be terminated.

In operation 360, the processor 220 may determine whether the phoneme character selected as a beautification target character is a circle-type phoneme character (e.g., the consonant " 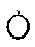 " or " 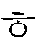 ", the capital letter "O" or "Q", or the small letter "e" or "o").

In operation 365, in case that the phoneme character is not a circle-type phoneme character, the processor 220 may determine whether the trajectories between the strokes constituting the phoneme character intersect each other.

As an operation of determining whether the trajectories between the strokes intersect each other, the processor 220 may use a counter clock-wise (CCW) algorithm, or may determine whether a portion of an extension of points included in the trajectory of the first stroke is included in a portion of the trajectory of the second stroke, or may determine whether a point intersection exists between points constituting the first stroke and the second stroke.

In operation 370, in case that the strokes have intersecting trajectories in the phoneme character that is not a circuit-type, the processor 220 may perform correction (or beautification) by removing an overstretched trajectory from among the stroke trajectories.

In operation 375, in case that the strokes do not have intersecting trajectories in the phoneme character that is not a circuit-type, the processor 220 may perform correction (or beautification) by increasing the trajectory so that one stroke may be connected to the other stroke.

In operation 380, in case that a phoneme character selected as the correction target character is a circle type, the processor 220 may determine whether the start and end points of the stroke intersect each other. In operation 390, in case that the start and end points of the stroke do not intersect each other, the processor 220 may generate a point of intersection at which the start point and the end point intersect each other.

In operation 395, the processor 220 may increase and correct (or beautify) the stroke trajectory so that the trajectory is connected to the point intersection. When the start point and the end point of a circle type stroke intersect, the processor 220 may proceed to operation 370 to remove the stroke trajectory in which the point intersection is overstretched among the stroke trajectories and correct (or beautify) the same.

According to an embodiment, the processor 220 may update (e.g., update the touch trajectory) the handwriting input data (e.g., stroke data) based on the correction (or beautification) result for each phoneme character and output the updated handwriting input on the touchscreen display.

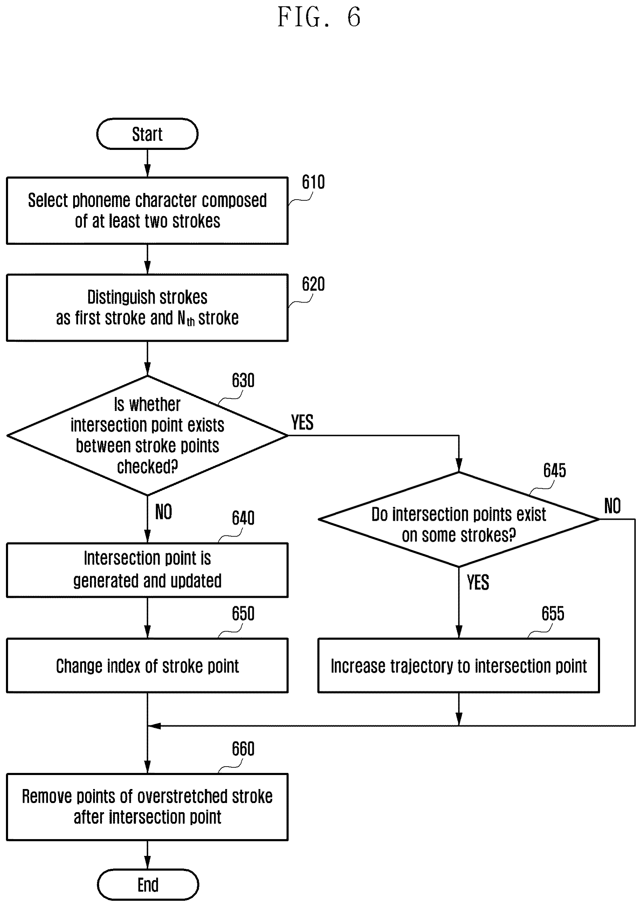

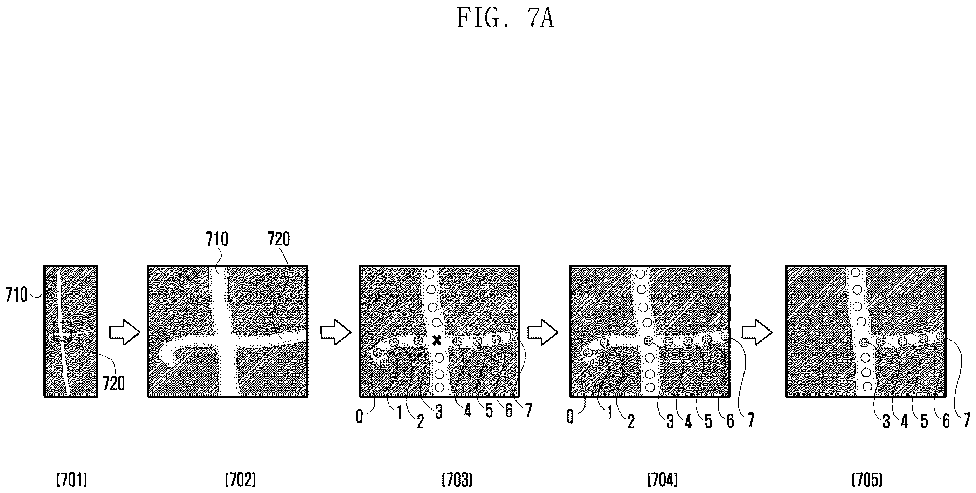

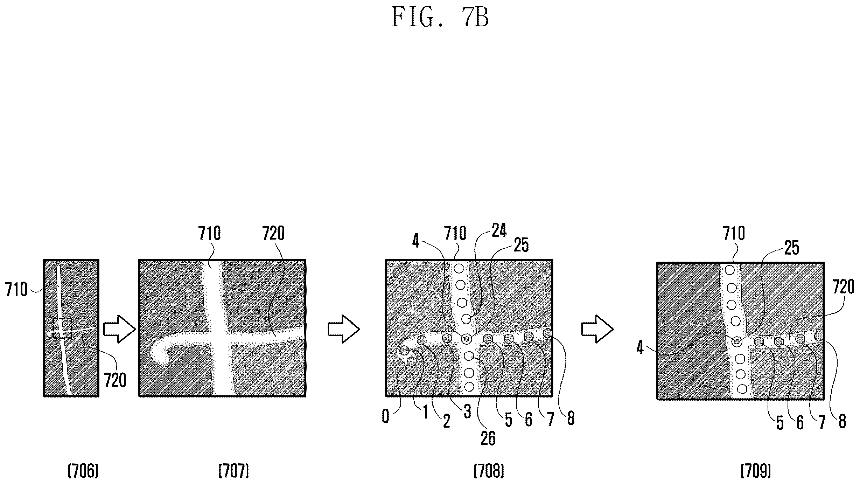

FIG. 6 illustrates a method for correcting handwriting input data of an electronic device according to an embodiment. FIG. 6 is a diagram for more specifically describing operations 365, 370, and 375 of FIG. 3. FIGS. 7A and 7B illustrate examples of a screen for correcting a stroke for a handwriting input according to an embodiment.

Referring to FIG. 6, in operation 610, the processor (e.g., the processor 120 in FIG. 1 and the processor 220 in FIG. 2) of the electronic device 101 according to an embodiment may select a phoneme character composed of at least two strokes as a target character for correction as part of a correction (or beautification) operation.

For example, the processor 220 may select a phoneme character including at least two strokes as a target character to be corrected by performing operations 355 and 360 in FIG. 3.

In operation 620, the processor 220 distinguishes strokes grouped by phoneme characters into the first stroke and the Nₜₕ stroke, and in operation 630 (or operation 370 in FIG. 3), the processor 220 may check (or determine) whether there is a point intersection between the points of the strokes.

For example, in case that the trajectories between strokes intersect each other, the processor 220 may remove an overstretched trajectory from among the stroke trajectories as a correction (or beautification) operation for each phoneme character, or in case that trajectories between strokes do not intersect each other in the phoneme character, the processor 220 may increase the stroke trajectory so that one stroke may be connected to another stroke.

In operation 640, in case that the strokes do not have intersecting trajectories, the processor 220 may update the stroke point so that a point intersection is generated, and in operation 650, the processor 220 may change the index of the stroke point to the updated point intersection.

According to an embodiment, the processor 220 may store the handwriting recognition result as index information for each stroke point that constitutes a recognized character (e.g., a phoneme character) for handwriting input. The processor 220 may generate index information of points constituting a stroke and store the same. Index information of the points constituting a stroke is assigned in the order of the touch trajectory corresponding to the stroke, and one index group may be mapped to one stroke.

When the electronic device 101 displays the handwriting input, each stroke point may be expressed by a trajectory extending in a direction.

For example, as illustrated in FIGS. 7A and 7B, the region in which the trajectory of a first stroke 710 and the trajectory of a second stroke 720 constituting a phoneme character intersect will be described in more detail. As shown in <701>, when the point at which the first stroke 710 and the second stroke 720 intersect is enlarged, the trajectory of <702> may be drawn. The processor 220 may express a trajectory of the stroke on the display based on the index information of the points included in the stroke. For example, as shown in <703>, the second stroke 720 may be composed of the index order of 0, 1, 2, 3, 4, 5, 6, and 7, and thus may be expressed as a trajectory from the location of the 0ₜₕ index point to the location of the 7ₜₕ index point. In the example of FIG. 7A, as shown in <703>, it may be identified that there is no point intersection where the trajectories of the first stroke 710 and the second stroke 720 intersect each other.

In this case, when the electronic device displays the handwriting input, it is expressed as a trajectory extending each stroke point, and if index points 0 to 3 are deleted during the correction or beautification process of the second stroke 720, the trajectory of the second stroke 710 starts from index point 4 (in other words, the second stroke 720 is displayed in a disconnected form without being connected to the first stroke 710), which may be unsightly.

According to an embodiment, in the example of FIG. 7A, the processor 220 may generate (or update) a point intersection at a location where the first stroke 710 and the second stroke 720 intersect as shown in <704>, and update and store the third index point of the second stroke 720 as the location of the point intersection of the first stroke 710 and the second stroke 720. For example, by updating (or moving) the coordinate information of the third index point of the second stroke 720 to the coordinate information of the location where the first stroke 710 and the second stroke 720 intersect, the first stroke 710 and the second stroke 720 may include a point intersection (e.g., the third index point) for each other.

In operation 660, the processor 220 may remove points of the overstretched stroke after the updated point intersection.

For example, as illustrated in FIG. 7A, the processor 220 may correct (or beautify) the second stroke 720 such that the second stroke 720 is connected to the first stroke 710 from the third index point, which is the location of the point intersection, by removing the 0ₜₕ to second index points of the second stroke 720 as shown in <705>.

In operation 645, the processor 220 may determine whether a point intersection exists in a stroke other than the stroke to be corrected when a point intersection exists in the points of intersecting strokes.

If all the points of the intersecting strokes include a point intersection, the processor 220 may proceed to operation 660 to perform correction (or beautification) by removing the overstretched points after the point intersection.

For example, as illustrated in FIG. 7B, when the point at which the first stroke 710 and the second stroke 720 in <708> intersect is enlarged, the trajectory of <707> may be drawn. As shown in <708>, assuming that the first stroke 710 includes 0ₜₕ to 7ₜₕ index points and the second stroke 720 includes 24ₜₕ, 25ₜₕ, and 26ₜₕ index points, it may be identified that the location of the intersection point is where the 25ₜₕ index point of the first stroke 710 and the 4ₜₕ index point of the second stroke 720 intersect each other. As shown in <709>, the processor 220 may identify that the 0ₜₕ to 3_{rd} index points of the second stroke 720 have been removed and corrected (or beautified) for correction of the second stroke 720.

In operation 655, in case that a point intersection exists in a stroke other than the stroke to be corrected, the processor 220 may increase (or update the point location) of the trajectory of a stroke not connected to the point intersection to the point intersection. The processor 220 may proceed to operation 660 to perform correction (or beautification) by removing the overstretched points after the point intersection.

For example, when the 25ₜₕ index point of the first stroke 740 is included but the 4ₜₕ index point does not exist in the second stroke 720, a new point index may be generated at the location of the 25ₜₕ index point of the first stroke 740 or the coordinate information of the existing index point may be changed to increase the trajectory of the second stroke 720.

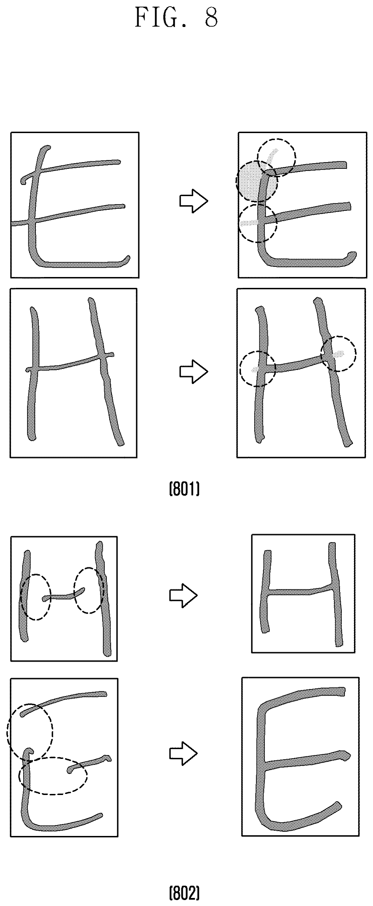

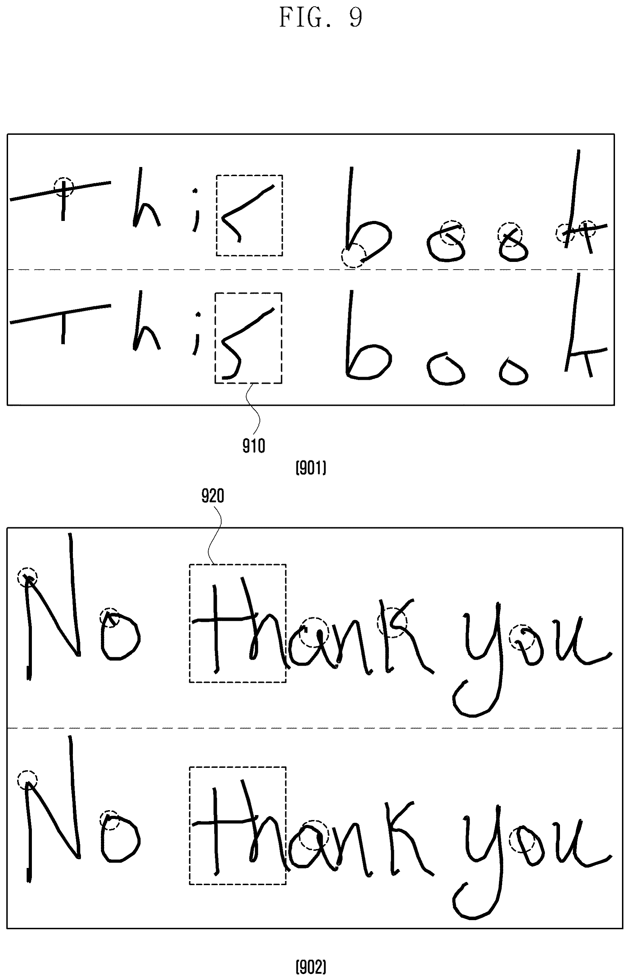

FIGS. 8 and 9 illustrate a comparison between handwriting input data of an electronic device before and after correction according to an embodiment.

Referring to FIGS. 8 and 9, the electronic device 101 may correct (or beautify) the user's handwriting input for each phoneme character, identify, as part of this operation, a part in which the trajectories of strokes constituting the phoneme character "E" intersect as shown in <801>, and delete the trajectories of the overstretched strokes in the intersecting part. Independently therefrom, the electronic device 101 may identify a part in which the trajectories of strokes constituting the phoneme character "H" intersect and delete the trajectories of the overstretched strokes in the intersecting part.

Conversely, as part of a correction (or beautification) operation for handwriting input of the electronic device 101, as shown in <802>, the electronic device 101 constituting a phoneme character may increase the stroke trajectories up to the point where the strokes intersect each other if there is no part where the stroke trajectories of the strokes that constitute the phoneme character "H" intersect each other. Independently therefrom, the electronic device 101 may also increase the stroke trajectories up to the point where the strokes intersect each other for the phoneme character "E".

The electronic device according to various embodiments may recognize a user's handwriting input in units of phoneme characters and perform correction (or beautification) for each phoneme character, thereby selectively correcting only the phoneme character units that require correction (or beautification) among the user's handwriting input.

For example, FIG. 9 may be example screen that visualizes handwriting input entered by a user, and an example screen that visualizes handwriting input entered by a user after correcting (or beautifying) the handwriting input according to the correction operation of the disclosure. As shown in <901> of FIG. 9, the user may handwrite "This book" on the touchscreen display. The electronic device may recognize "This book" in units of phoneme characters with the capital letter "T", the small letter "h", the small letter "i", the small letter "b", the small letter "o", the small letter "o", and the small letter "k", and may select the capital letter "T", the small letter "b", the small letter "o", the small letter "o", and the small letter "k" as the target characters for correction and perform correction (or beautification) based on the intersection characteristics of the strokes that constitute each phoneme character.

Likewise, in <902> of FIG. 9, the electronic device 101 may recognize the user's handwriting input for "No, thank you" in units of phoneme characters with the capital letter "N", the small letter "o", the small letter "a", the small letter "n", the small letter "k", the small letter "y", the small letter "o", the small letter "u", and may select the capital letter "N", the small letter "o", the small letter "a", the small letter "k" and the lowercase letter "o" as the target characters for correction and perform correction (or beautification) based on the intersection characteristics of the strokes.

In this case, "s" 910 of <901> or "th" 920 of <902> may be excluded from the target characters for correction because the recognition in units of phoneme characters by the electronic device has failed, or it is determined that the recognition code of "s" or the recognition codes of "t" and "h" do not meet the defined reference features.

As described above, various embodiments may provide a user with a more neatly organized handwriting while maintaining the user's handwriting characteristics as compared to the user's original handwriting input.

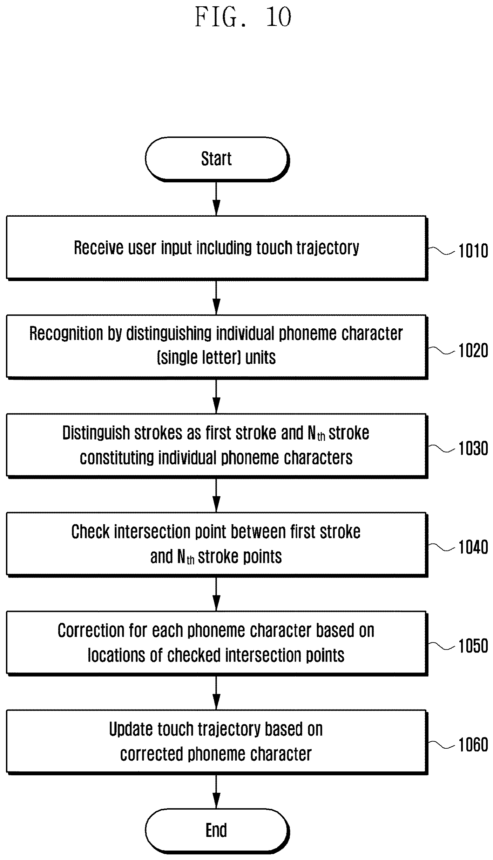

FIG. 10 illustrates a method for correcting handwriting input data of an electronic device according to an embodiment.

Referring to FIG. 10, in operation 1010, the processor (e.g., the processor 120 in FIG. 1 or the processor 220 in FIG. 2) of the electronic device 101 according to an embodiment may receive a user input (e.g., touch data) including a touch trajectory from a touchscreen display. For example, the processor 220 may receive a user input (e.g., touch data including a touch trajectory) based on a proximity and/or touch signal from the touchscreen display 210.

In operation 1020, the processor 220 may recognize the handwriting input data by distinguishing individual phoneme character (or single letter) units, based on the user input.

According to an embodiment, the processor 220 may recognize handwriting input by dividing the same into individual phoneme characters (or single letters) through the handwriting recognition engine 221.

For example, the processor 220 may group strokes according to a touch trajectory included in a user input (e.g., touch data) in units of phoneme characters (or single letters) and recognize (or select) a phoneme character (or in units of single letters) composed of the grouped strokes. For example, the processor 220 may group a first stroke (e.g., a vertical stroke) and a second stroke (e.g., a horizontal stroke) as a group, when the first and second strokes constitute one character (e.g., the capital letter T), and recognize (or select) the grouped strokes as one phoneme character (e.g., the capital letter T).

In operation 1030, the processor 220 may distinguish between the first stroke and the Nₜₕ stroke that constitute phoneme characters for each phoneme character included in the recognized handwriting input data.

According to an embodiment, the processor 220 may distinguish the strokes that constitute phoneme characters based on the stroke data (or handwriting input data, cursive data, and touch drawing data) of the recognized phoneme character (e.g., English, numbers, Korean, symbols, etc.).

According to an embodiment, the stroke data may include a recognition code (e.g., T) for identifying a phoneme character and stroke information (e.g., stroke information constituting the phoneme character "T"). The stroke information may include at least one of the number of strokes (e.g., a number) grouped by one phoneme character, the order of strokes (e.g., the order of the first stroke and the second stroke), points of the strokes (e.g., index information of points included in the first stroke and index information of points included in the second stroke), the stroke width or touch pressure (e.g., the stroke thickness or the size of a touch region), the location of the stroke, the length of the stroke, the slope of the stroke, the direction of the stroke, and/or the distance between the strokes.

According to an embodiment, the processor 220 may extract stroke features that constitute individual phoneme characters.

In operation 1040, the processor 220 may check a point intersection between points of a first stroke and an Nₜₕ stroke constituting the phoneme character for each phoneme character.

As an operation of checking for intersection between points of the first stroke and the Nₜₕ stroke, the processor 220 may use a counter clock-wise (CCW) algorithm, or may determine whether a portion of an extension of points included in the trajectory of the first stroke is included in a portion of the trajectory of the second stroke, or may determine whether a point intersection exists between points constituting the first stroke and the second stroke.

In operation 1050, the processor 220 may correct phoneme characters for each phoneme character according to the location of the point intersection.

According to an embodiment, in case that the trajectories between strokes intersect each other, the processor 220 may remove an overstretched trajectory from among the stroke trajectories, or in case that trajectories between strokes do not intersect each other in the phoneme character, the processor 220 may increase the stroke trajectory so that one stroke may be connected to another stroke.

According to an embodiment, the processor 220 may generate a point intersection between two strokes when there is no point intersection where the trajectories intersect between the points corresponding to the touch trajectories of the first stroke and the Nₜₕ stroke, and increase the touch trajectory so that the first stroke or the Nₜₕ stroke is connected to the generated point intersection.

The processor 220 may check a point intersection between the start and end points of one stroke when the phoneme character is recognized as a phoneme character composed of one stroke, remove the points of the overstretched trajectory when the point intersection between the start and end points is overstretched, and increase the touch trajectory so that a point intersection occurs when the start and end points do not intersect.

In operation 1060, the processor 220 may update a touch trajectory corresponding to the handwriting input data based on the corrected phoneme character.

According to an embodiment, the processor 220 may update (e.g., update the touch trajectory) the handwriting input data (e.g., stroke data) based on the correction (or beautification) result for each phoneme character and output the updated handwriting input on the touchscreen display.

A method for correcting handwriting input data performed by an electronic device 101 according to an embodiment may include receiving a user input including a touch trajectory from the touchscreen display 210.

The method according to an embodiment may include recognizing handwriting input data in units of individual phoneme characters based on the user input.

The method according to an embodiment may include distinguishing a first stroke and Nₜₕ strokes constituting a phoneme character for each phoneme character included in the recognized handwriting input data.

The method according to an embodiment may include checking a point intersection between the first stroke and Nₜₕ stroke points for each phoneme character.

The method according to an embodiment may include correcting each phoneme character based on the location of the checked point intersection.

The method according to an embodiment may include updating a touch trajectory corresponding to the handwriting input data based on the corrected phoneme character.

The operation of distinguishing a first stroke and Nₜₕ strokes constituting the phoneme character for each phoneme character according to an embodiment may be characterized by identifying the recognition code for each phoneme character, extracting individual stroke feature constituting each phoneme character, comparing the reference feature defined in the recognition code corresponding to each phoneme character with the stroke feature of the recognized phoneme character to select a phoneme character to be corrected from among the handwriting-recognized user inputs, and distinguishing between the first stroke and Nₜₕ stroke for the selected phoneme character.

The operation of recognizing handwriting corresponding to the user input according to an embodiment in units of individual phoneme characters may further include outputting stroke data for each phoneme character as a result of the recognition.

The operation of correcting each phoneme character based on the location of the checked point intersections may be characterized by determining whether the trajectories of the first stroke and the Nₜₕ stroke constituting the phoneme character intersect each other, removing the overstretched trajectory based on the points of the first stroke and the Nₜₕ stroke when there is a point intersection in the point trajectories of the first stroke and the Nₜₕ stroke, and increasing the touch trajectory of either the first stroke or the Nₜₕ stroke so that a point intersection occurs when there is no point intersection of the touch points of the first stroke and the Nₜₕ stroke.

The operation of increasing the touch trajectory of the first stroke or the Nₜₕ stroke so that a point intersection occurs among the touch points when there is no point intersection of the touch points of the first stroke and the Nₜₕ stroke according to an embodiment may be characterized by generating a point intersection between two strokes when there is no point intersection where the trajectories intersect between the points corresponding to the touch trajectories of the first stroke and the Nₜₕ stroke, and increasing the touch trajectory so that the first stroke or the Nₜₕ stroke is connected to the generated point intersection.

The operation of correcting each phoneme character based on the location of the checked point intersections according to an embodiment may be characterized by checking a point intersection between the start and end points of one stroke when the phoneme character is recognized as a phoneme character composed of one stroke, removing the points of the overstretched trajectory when the point intersection between the start and end points is overstretched, and increasing the touch trajectory so that a point intersection occurs when the start and end points do not intersect.

The operation of comparing the reference feature defined in the recognition code corresponding to each phoneme character with the stroke feature of the recognized phoneme character to select a phoneme character to be corrected from among the handwriting-recognized user inputs according to an embodiment may be configured not to perform correction for the recognized phoneme character when the stroke feature of the phoneme character recognized based on the user input does not meet the reference feature defined in the recognition code of the corresponding phoneme character.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include codes generated by a compiler or code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above- described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a touchscreen display;
a memory configured to store executable instructions; and
a processor configured to access the memory to execute the instructions,
wherein the instructions, when executed by the processor, cause the electronic device to:
receive a user input including a touch trajectory from the touchscreen display;
based on the user input, recognize handwriting input data in units of individual phoneme characters;
for each of the phoneme characters corresponding to the recognized handwriting input data, distinguish between a first stroke and Nₜₕ strokes constituting the phoneme character;
check point intersections between the first stroke and Nₜₕ strokes for each of the phoneme characters;
based on locations of the checked point intersections, correct each of the phoneme characters; and
based on the corrected phoneme characters, update the touch trajectory corresponding to the handwriting input data.

2. The electronic device of claim 1, wherein the touch trajectory includes coordinate data of points corresponding to continuous touches.

3. The electronic device of claim 1, wherein the instructions cause the electronic device to, as an operation of recognizing handwriting input data in units of individual phoneme characters, based on the user input, output a recognition code and stroke data for each of the phoneme characters as a result of the recognition, and
wherein the stroke data includes at least one of a recognition code for identifying a phoneme character, the number of strokes, order of strokes, index information of stroke points, stroke thicknesses, stroke locations, stroke lengths, stroke slopes, stroke directions, and distances between strokes.

4. The electronic device of claim 3, wherein the instructions cause the electronic device to, as an operation of distinguishing between a first stroke and Nₜₕ strokes constituting a phoneme character:
identify each recognition code for each of the phoneme characters;
extract a stroke feature constituting each of the phoneme characters;
compare a reference feature defined by the recognition code corresponding to each of the phoneme characters with the stroke feature of the recognized phoneme character to select a phoneme character to be corrected from the handwriting-recognized user input; and
selectively distinguish between the first stroke and Nₜₕ stroke only for the selected phoneme character.

5. The electronic device of claim 4, wherein the instructions cause the electronic device to, as an operation of extracting a stroke feature constituting each of the phoneme characters:
extract angular components of points included in each stroke;
convert the extracted angular components into direction vectors;
convert the angular components of the points into 8 direction vectors; and
convert the 8 direction vectors into stroke scores to identify each stroke type, and
wherein the stroke type comprises one of a horizontal stroke type, a vertical stroke type, or other stroke types.

6. The electronic device of one of claims 2 and 5, wherein the instructions cause the electronic device to, as an operation of correcting each of the phoneme characters, based on the locations of the checked point intersections:
determine whether touch trajectories of the first stroke and the Nₜₕ stroke constituting the phoneme character intersect each other;
in case that there is a point intersection between the touch trajectories of the first stroke and the Nₜₕ stroke, remove a trajectory over the point intersection, based on the points of the first stroke and the Nₜₕ stroke; and
in case that there is no point intersection between the touch trajectories of the first stroke and the Nₜₕ stroke, increase the touch trajectory of one of the first stroke or the Nₜₕ stroke such that a point intersection occurs.

7. The electronic device of claim 6, wherein the instructions cause the electronic device to, as an operation of, in case that there is no point intersection between the touch trajectories of the first stroke and the Nₜₕ stroke, increasing the touch trajectory of the first stroke or the Nₜₕ stroke such that a point intersection occurs among the points:
in case that, among the points corresponding to the touch trajectories of the first stroke and the Nₜₕ stroke, there is no point intersection where the trajectories intersect, generate a point intersection between two strokes; and
increase the touch trajectory such that the first stroke or the Nₜₕ stroke is connected to the generated point intersection.

8. The electronic device of claim 6, wherein the instructions cause the electronic device to, as an operation of correcting each of the phoneme characters, based on the locations of the checked point intersections:
in case that the phoneme character is recognized as a phoneme character composed of one stroke, check a point intersection between the start and end points of one stroke;
in case that the stroke is over the point intersection between the start and end points, remove the points in the stroke over the point intersection; and
in case that there is no point intersection between the start and end points, increase the touch trajectory such that a point intersection occurs.

9. The electronic device of claim 4, wherein the instructions cause the electronic device not to perform correction for the recognized phoneme character in case that the stroke feature of the phoneme character recognized based on the user input does not meet the reference feature defined by the recognition code of the corresponding phoneme character.

10. The electronic device of claim 6,wherein the instructions cause the electronic device to, as an operation of determining whether the touch trajectories of the first stroke and the Nₜₕ stroke constituting the phoneme character intersect each other, use a counterclockwise (CCW) algorithm, check whether there is a point intersection between points of the first stroke and the Nₜₕ stroke, or check whether some of the points included in the trajectory of the first stroke are included in some of the points included in the trajectory of the Nₜₕ stroke.

11. A method for correcting handwriting input data by an electronic device, the method comprising:
receiving a user input including a touch trajectory from a touchscreen display;
based on the user input, recognizing handwriting input data in units of individual phoneme characters;
for each phoneme character corresponding to the recognized handwriting input data, distinguishing between a first stroke and Nₜₕ strokes constituting the phoneme character;
checking point intersections between the first stroke and Nₜₕ strokes for each of the phoneme characters;
based on locations of the checked point intersections, correcting each of the phoneme characters; and
based on the corrected phoneme character, updating the touch trajectory corresponding to the handwriting input data.

12. The method of claim 11, wherein the distinguishing between the first stroke and Nₜₕ strokes constituting the phoneme character comprises:
identifying a phoneme character recognition code;
extracting a stroke feature constituting each of the phoneme characters;
comparing a reference feature defined by the recognition code corresponding to each of the phoneme characters with the stroke feature of the recognized phoneme character to select a phoneme character to be corrected from the handwriting-recognized user input; and
selectively distinguishing between the first stroke and Nₜₕ stroke only for the selected phoneme character.

13. The method of claim 11, wherein the recognizing of the handwriting input data in units of individual phoneme characters, based on the user input, further comprises outputting stroke data for each of the phoneme characters as a result of the recognition, and
wherein the stroke data includes at least one of a recognition code for identifying a phoneme character, the number of strokes, order of strokes, index information of stroke points, stroke thicknesses, stroke locations, stroke lengths, stroke slopes, stroke directions, and distances between strokes.

14. The method of claim 11, wherein the correcting of each of the phoneme characters, based on the locations of the checked intersections, comprises:
determining whether the touch trajectories of the first stroke and the Nₜₕ stroke constituting the phoneme character intersect each other;
in case that there is a point intersection between the touch trajectories of the first stroke and the Nₜₕ stroke, removing a trajectory over the point intersection, based on the points of the first stroke and the Nₜₕ stroke; and
in case that there is no point intersection between the touch trajectories of the first stroke and the Nₜₕ stroke, increasing the touch trajectory of one of the first stroke or the Nₜₕ stroke such that a point intersection occurs.

15. The method of claim 14, wherein the increasing of the touch trajectory of the first stroke or the Nₜₕ stroke such that a point intersection occurs in case that there is no point intersection between the touch trajectories of the first stroke and the Nₜₕ stroke comprises:
in case that, among the points corresponding to the touch trajectories of the first stroke and the Nₜₕ stroke, there is no point intersection where the trajectories intersect, generating a point intersection between two strokes; and
increasing the touch trajectory such that the first stroke or the Nₜₕ stroke is connected to the generated point intersection.
